Europäisches Patentamt

European Patent Office

Office européen des brevets

(11) Publication number: **0 281 272**

**A1**

# (12) EUROPEAN PATENT APPLICATION

(21) Application number: 88301302.1

(22) Date of filing: 17.02.88

(51) Int. Cl.4: **G01F 23/24** , C04B 35/64 , C04B 35/10

(30) Priority: 03.03.87 GB 8704907

(43) Date of publication of application:
07.09.88 Bulletin 88/36

(84) Designated Contracting States:
DE FR IT

(71) Applicant: SCHLUMBERGER ELECTRONICS
(U.K.) LIMITED
124 Victoria Road
Farnborough Hampshire GU14 7PW(GB)

(72) Inventor: Tovey, Stuart James
17 Orchard Close
Ash Vale Aldershot Hampshire, GU14
5HU(GB)
Inventor: Cosser, Harry Frederick
16 Tavistock Road
Fleet Hampshire(GB)

(74) Representative: Stoole, Brian David et al
Schlumberger Electronics (U.K.) Limited 124
Victoria Road
Farnborough Hampshire GU14 7PW(GB)

(54) **High pressure electrode assemblies.**

(57) An electrode assembly for use in sensing the
water level in a high pressure boiler comprises an
electrode (11) which in use is immersed in the water.
The electrode (11) is insulated from the body of the
assembly by a ceramic insulator and spacer (101),
which in use is also immersed in the water. To
permit the assembly to be used at pressures of the
order of 200 bar, the ceramic insulator (101) is
formed from alumina by hot isostatic pressing.

EP 0 281 272 A1

## HIGH PRESSURE ELECTRODE ASSEMBLIES

This invention relates to electrode assemblies for use in high pressure water and steam environments, and is more particularly but not exclusively concerned with electrode assemblies for use in apparatus for measuring the level of the water in a high pressure boiler during operation of the boiler.

An electrode assembly for use in such boiler water level measuring apparatus is normally used to sense the presence or absence of water at a given level in the boiler, normally by mounting it in a container known as a side arm which is connected to the boiler at upper and lower levels thereof such that the level of the water in the container is substantially the same as that in the boiler. Such an electrode assembly typically comprises a first electrode which is disposed, in use, inside the container and which is insulated from a further electrode, so that a resistivity measurement may be performed between the two electrodes: however, where the container is conductive, the further electrode may be constituted by the container itself. A series of such electrode assemblies arranged for resistance to be measured at various different levels in the container thus enables the water level in the boiler to be assessed.

A suitable electrode assembly can be formed as a steel rod entering the container through a sealed entry port, the seal incorporating an insulator so that the rod is usable as the first electrode. Insulators which have been employed for this purpose include some ceramic materials such as aluminium oxide ($Al_2 O_3$).

In some applications, the electrode assemblies are required to withstand use in boilers operating at pressures in excess of 200 bar. Not only must the first electrode be able to withstand such a pressure in the intense steam/water boiler environment, but also the ceramic insulator. Unfortunately the life of such electrode assemblies has not proved to be as long as hoped for, being typically determined by eventual failure of the ceramic insulator; and some of these failures occur after an undesirably short life. This tendency to premature failure leads to frequent replacement of electrode assemblies, with consequent halting of plant operation. The need for this frequent periodic replacement is a particular problem where plant access is difficult or impracticable, such as in certain areas of nuclear driven plant. Replacement in some plant, for example coal-or oil-fired power generating station boilers, is also extremely costly in terms of materials, effort and most importantly, down time.

The mechanism of the failure of the ceramic insulator is thought to be essentially one of corrosion of the ceramic material of the insulator. The sintered and closed porous nature of ceramic material is affected by high pressure water, being effectively dissolved. This leads to an enlargement of the interstitial pores by grain boundary corrosion.

It is an object of the present invention to provide an electrode assembly having a ceramic insulator which is less corrosion-susceptible than those of prior art electrode assemblies.

According to the present invention there is provided an electrode assembly for use in high pressure water/steam environments, the assembly comprising at least one electrode which is insulated from another part of the assembly by an insulator of ceramic material, wherein said insulator is formed from said ceramic material by hot isostatic pressing.

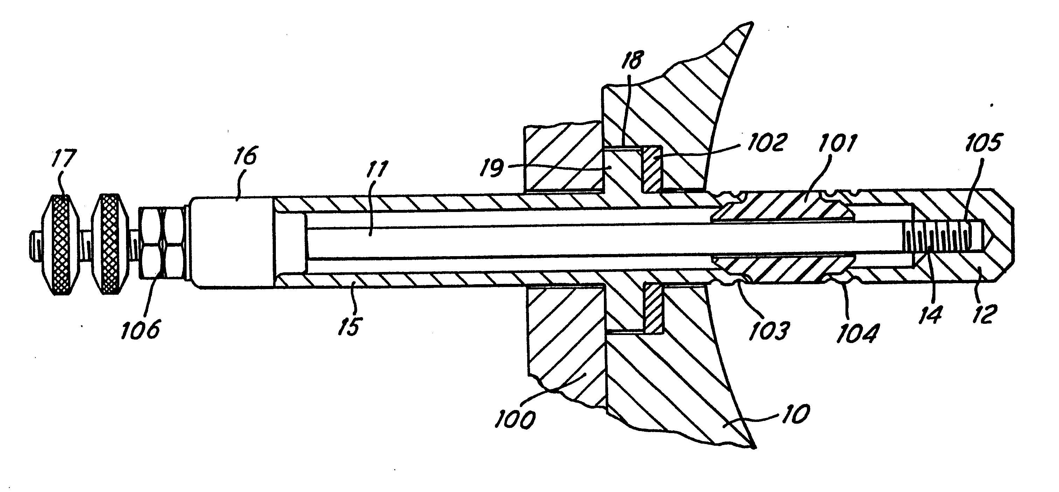

In order that features and advantages of the present invention may be further appreciated, an embodiment will now be described, by way of example only, with reference to the accompanying drawing, which shows an electrode assembly in accordance with the invention, for use at high pressure.

The electrode assembly of the drawing is intended for assessing the level of water in a boiler, and comprises a first electrode in the form of a stainless steel rod 11 which has a tip section 12 attached through the agency of a stud 14 threaded onto the rod end. The rod 11 is surrounded by a stainless steel sheath 15 and spaced apart therefrom by an insulating collar 16. The rod 11 is terminated in a screw-type electrical connection 19, to allow electrical connection thereto. In use, the sensor is introduced into the body of a boiler side arm of the kind mentioned hereinbefore through a hole in side arm wall 10, and secured in place by the co-operation of a circular well 18 in the side arm wall, a flange 19 on the sheath 15 and a clamping plate 100. Sealing is afforded by gasket 102.

Tip section 12 is brazed to the stud 14 as will hereinafter become apparent, and is configured as an extension of the sheath 15 but spaced apart therefrom by a ceramic spacer and insulator 101, which also serves to provide separation and insulation between sheath 15 and electrode rod 11. Thus in use the sheath 15 is at ground potential by virtue of contact with side arm wall 10, and rod 11 and electrode tip 14 are insulated therefrom so that a measurement may be made, for example an electrode/ground resistivity or conductivity measurement, to establish water level as described in UK Patent No. 1 605 145.

In addition to its separation and insulation function, the ceramic spacer 101 provides a seal between the side arm interior and interior, and is therefore subject to the full operating pressure of the boiler, for example 200 bar. Spacer 101 is brazed to the metal components as described in published United Kingdom Patent Application No. 2 173 138 A, the brazing of tip section 12 to stud 14 taking place at the same time by virtue of braze material placed therebetween when they were originally screwed together.

The sealing life of the spacer 101 is determined by its corrosion resistance. Typical in-service life of prior art spacers was of the order of three years, and electrode assemblies had to be replaced at least this frequently in order to avoid failure in use. However, in the electrode assembly of the present invention, the spacer 101 is made from a ceramic to which a hot isostatic pressing process has been applied.

This hot isostatic pressing process includes the steps of:

placing a ceramic material shaped to form a slightly larger version of the spacer than is required for the final version in a retort;

providing an inert gas atmosphere within the retort;

subjecting the ceramic material to an elevated temperature, typically 1450°C, being a temperature below that at which softening and grain growth might occur;

subjecting the ceramic material simultaneously to an elevated pressure, typically 30,000 p.s.i.; and

maintaining these conditions for an extended period, typically 2 hours.

This process of hot isostatic pressing enhances corrosion resistance by reducing the interstitial gap within the ceramic structure, resulting in a structure which is essentially that of a single crystal.

It is desirable that the ceramic material to which the hot isostatic pressing process is applied is of low silica content, typically below 0.1%, as it is thought that excess silica promotes corrosion by entering a liquid phase between the grains of for example an alumina based ceramic material. It is also advantageous that such ceramic materials are generally pure, typically at least 99.5% $Al_2 O_3$. Ceramic spacer 101 is fabricated in this way of such material. As compared with a component made in accordance with prior art ceramic processes, the initial dimensions are, as already indicated, slightly larger, since a certain shrinkage occurs during hot isostatic pressing. An electrode assembly including such a ceramic spacer, not being susceptible to corrosion, has a much extended life expectancy. It is anticipated that the replacement interval for such electrode assemblies will be not less than 10 years and probably longer, leading to a greatly reduced frequency for plant shut-down.

## Claims

1. An electrode assembly for use in high pressure water/steam environments, the assembly comprising at least one electrode which is insulated from another part of the assembly by an insulator of ceramic material, wherein said insulator is formed from said ceramic material by hot isostatic pressing.

2. An electrode assembly as claimed in claim 1, wherein the ceramic material is aluminium oxide.

3. An electrode assembly as claimed in claim 2, wherein the aluminium oxide is of at least 99.5% purity, and contains less than 0.1% silica.

4. An electrode assembly as claimed in any preceding claim, wherein said insulator is formed by:

placing a ceramic material shaped to form a slightly larger version of the insulator than is required for the final version in a retort;

providing an inert gas atmosphere within the retort;

subjecting the ceramic material to an elevated temperature, being a temperature below that at which softening and grain growth might occur;

subjecting the ceramic material simultaneously to an elevated pressure; and

maintaining these conditions for an extended period.

5. An electrode assembly as claimed in claim 4, wherein said elevated temperature is of the order of 1450°C.

6. An electrode assembly as claimed in claim 4 or claim 5, failure said elevated pressure is of the order of 30,000 p.s.i.

7. An electrode assembly as claimed in any one of claims 4 to 6, wherein said extended period is of the order of 2 hours.

## DOCUMENTS CONSIDERED TO BE RELEVANT

EP 88301302.1

| Category | Citation of document with indication, where appropriate, of relevant passages | Relevant to claim | CLASSIFICATION OF THE APPLICATION (Int. Cl.4) |
|---|---|---|---|
| Y,D<br><br>A | GB - A - 2 173 138 (SCHLUMBERGER)<br><br>* Abstract; fig. 1; page 1, lines 5-79; page 2, lines 11-76 *<br><br>-- | 1,2<br><br>3 | G 01 F 23/24<br><br>C 04 B 35/64<br><br>C 04 B 35/10 |
| Y<br><br>A | KIRK-OTHMER "Encyclopedia of Chemical Technology", 3rd edition, vol. 12, 1980<br><br>JOHN WILEY & SONS, INC., New York<br>pages 410-413<br><br>* Pages 410-411; fig. 52 *<br><br>-- | 1,2<br><br>4 | |
| Y<br><br>A | DE - A1 - 3 239 316 (KABUSHIKI)<br><br>* Claim 1; page 7, line 1 - page 8, line 14; page 18, line 23 - page 23, line 16 *<br><br>-- | 1,2<br><br>4,5,7 | |
| A | GB - A - 2 127 976 (THE CLARK-RELIANCE CORP.)<br><br>* Abstract; fig. 1; page 1, lines 5-58 *<br><br>-- | 1,2 | TECHNICAL FIELDS SEARCHED (Int. Cl.4)<br><br>G 01 F<br><br>C 04 B<br><br>B 30 B<br><br>H 01 B |
| A | EP - A2 - 0 198 786 (EMERSON)<br><br>* Abstract; page 2, lines 5-34 *<br><br>---- | 1,4,6 | |

The present search report has been drawn up for all claims

| Place of search | Date of completion of the search | Examiner |
|---|---|---|
| VIENNA | 08-06-1988 | GRONAU |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82